# NEUE EUROPÄISCHE PATENTSCHRIFT

(11) **EP 3 529 117 B2**
(45) Veröffentlichungstag und Bekanntmachung des Hinweises auf die Entscheidung über den Einspruch: **17.04.2024**
(45) Hinweis auf die Patenterteilung: 02.12.2020
(21) Anmeldenummer: 17783461.1
(22) Anmeldetag: 10.10.2017
(51) Int. Cl.: B60T 13/74, B60T 13/66, F16D 65/14

(54) **SYSTEM MIT GETRENNTEN STEUEREINHEITEN FÜR DIE STELLEINHEITEN EINER ELEKTRISCHEN PARKBREMSE**
SYSTEM COMPRISING SEPARATE CONTROL UNITS FOR THE ACTUATION UNITS OF AN ELECTRIC PARKING BRAKE
SYSTÈME COMPRENANT DES UNITÉS DE COMMANDE SÉPARÉES POUR LES UNITÉS DE RÉGLAGE D'UN FREIN DE STATIONNEMENT ÉLECTRIQUE

(30) Priorität: 20.10.2016 DE 102016012530
(43) Veröffentlichungstag der Anmeldung: 28.08.2019
(73) Patentinhaber: ZF Active Safety GmbH, 56070 Koblenz (DE)
(72) Erfinder: MICHELS, Erwin, 56829 Kail (DE); OHLIG, Benedikt, 56179 Vallendar (DE); FUCHS, Matthias, 56068 Koblenz (DE)
(74) Vertreter: Prinz & Partner mbB
(86) Internationale Anmeldenummer: PCT/EP2017/075728
(87) Internationale Veröffentlichungsnummer: WO 2018/073038

(56) Entgegenhaltungen:
- EP-A2- 0 780 276
- WO-A1-99/26818
- WO-A1-2009/013193
- WO-A1-2009/074252
- DE-A1- 19 826 132
- DE-A1-102011 084 534
- DE-A1-102011 084 534
- DE-A1-102012 010 562
- DE-A1-102012 010 562
- DE-A1-102014 002 817
- US-A1- 2009 195 058
- US-B1- 6 317 675
- US-B1- 6 345 225

## Beschreibung

### Technisches Gebiet

Die vorliegende Offenbarung betrifft allgemein das Gebiet der in einem Fahrzeug zu verbauenden Steuereinheiten. Konkret wird die Ansteuerung einer elektrischen Parkbremse beschrieben.

### Hintergrund

Elektrische Parkbremsen (EPB) haben Einzug in eine Vielzahl moderner Kraftfahrzeuge gefunden. Derartige EPB-Systeme umfassen herkömmlicherweise zwei elektrische Stelleinheiten an verschiedenen Fahrzeugrädern sowie eine den Stelleinheiten zugeordnete EPB-Steuereinheit.

Bei einem hydraulischen Bremssystem sind die EPB-Stelleinheiten an den Radbremsen zweier gegenüberliegender Fahrzeugräder verbaut und ermöglichen eine elektrische Betätigung eines jeweiligen Radbremszylinders im Parkbremsbetrieb (Einzelheiten hierzu finden sich beispielsweise in der DE 197 32 168 A). Im Normalbremsbetrieb werden die Radbremszylinder hingegen hydraulisch betätigt. Hierzu stehen die Radbremszylinder in fluider Verbindung mit einem Hauptzylinder.

Bei einem herkömmlichen hydraulischen Bremssystem ist der Hauptzylinder mechanisch mit einem Bremspedal gekoppelt. Bei einem so-genannten Brake-By-Wire-System ist das Bremspedal hingegen - jedenfalls im Normalbremsbetrieb - mechanisch vom Hauptzylinder entkoppelt. Die Bremspedalbetätigung wird hier sensorisch erfasst und zur Ansteuerung einer auf den Hauptzylinder einwirkenden elektrischen Stelleinheit elektronisch aufbereitet. Ferner sind elektrische Bremskraftverstärker bekannt (auch Electric Brake Boost, EBB, genannt), bei denen eine mittels des Bremspedals auf den Hauptzylinder eingeleitete Kraft durch eine ebenfalls auf den Hauptzylinder einwirkende elektrische Stelleinheit verstärkt wird.

Aufgrund des Kostendrucks in der Fahrzeugindustrie ist es wünschenswert, die Systemkosten durch Einsparungen zu verringern. Gleichzeitig darf die Systemsicherheit nicht unter den entsprechenden Einsparungen leiden. Diese Vorgaben gelten insbesondere auch für das im Fahrzeug verbaute Bremssystem.

In diesem Zusammenhang wird beispielsweise in der WO 2006/061238 A1 die Ansteuerung von EPB-Stelleinheiten mittels der einem Automatikgetriebe zugeordneten Steuereinheit vorgeschlagen. Auf diese Weise kann eine herkömmliche Getriebeverriegelung in Form einer Parksperre eingespart werden. In der WO 2006/061238 A1 finden sich ferner unterschiedliche Ansätze für eine redundante Auslegung der Kommunikationsverbindungen in einem EPB-System, um die Systemsicherheit zu erhöhen.

Die Druckschrift DE 10 2011 084 534 A1 offenbart ein elektronisches Steuergerät für ein Bremssystem eines Kraftfahrzeugs. Dabei weist das System mindestens eine Schnittstelle zu einem Bedienelement und mindestens zwei Ansteuerschaltungen für elektrische Aktuatoren auf. Das Steuergerät umfasst zwei oder mehr unabhängige Recheneinheiten, welche über einen Datenbus direkt miteinander verbunden sind.

Die Druckschrift DE 10 2012 010 562 A1 offenbart ein Feststellbremsensystem für ein Fahrzeug, insbesondere für einen Kraftwagen, welches zwei Steuereinheiten zum Steuern von zwei Aktuatoren umfasst. Die Aktuatoren sind dazu ausgelegt, jeweilige Radbremsen zu betätigen.

Die Druckschrift WO 2009/013193 A1 offenbart eine Feststellbremsanlage für Kraftfahrzeuge. Die Feststellbremsanlage umfasst ein Bedienelement, wenigstens zwei elektromechanische Aktuatoren, eine Radansteuerungseinheit und eine weitere Steuereinheit. Die Aktuatoren dienen der Erzeugung einer Feststellbremskraft an jeweils einem Rad des Kraftfahrzeugs.

Die Druckschrift WO 99/26818 A1 offenbart eine elektromechanische Feststellbremsanlage für Kraftfahrzeuge. Die Feststellbremsanlage umfasst eine Bremsbedienungseinrichtung, eine elektronische Steuereinrichtung und mindestens zwei motorisch betätigbaren Feststellbremsen, wobei die Feststellbremsen in Abhängigkeitvon den Ausgangssignalen der Steuereinrichtung ansteuerbar sind.

Aus der DE 10 2007 029 910 A1 ist eine elektrische Parkbremse bekannt, bei der für jede Radbremse ein eigener Aktor mit einem eigenen, daran angeschlossenen Steuergerät vorgesehen ist. Die beiden Steuergeräte sind mit einem dritten Steuergerät gekoppelt, das unter anderem ein ESP- oder ein Getriebesteuergerät ist. Dieses dritte Steuergerät übernimmt eine Erfassung eines Fahrerwunsches, wenn dieser einen Taster oder Schalter betätigt, um eine Parkbremse zu aktivieren. Bei Verwendung der elektrischen Parkbremse kann eine Sperrklinke eines Automatikgetriebes entfallen, wenn eine aktorintegrierte Ansteuerung mit anderen im Fahrzeug vorhandenen Steuergeräten erfolgt.

### Kurzer Abriss

Der vorliegenden Offenbarung liegt die Aufgabe zugrunde, ein verbessertes System aus Steuereinheiten im Zusammenhang mit einer EPB anzugeben.

Die Aufgabe wird gelöst durch die Merkmale der unabhängigen Ansprüche. Im Anspruch 1 wird ein System für ein Kraftfahrzeug angegeben, das eine erste elektrische Parkbremsstelleinheit umfasst, die einem ersten Fahrzeugrad zugeordnet ist, sowie eine zweite elektrische Parkbremsstelleinheit, die einem zweiten Fahrzeugrad zugeordnet ist. Das System umfasst ferner eine erste Steuereinheit mit wenigstens einem ersten Mikroprozessor, wobei die erste Steuereinheit zum Ansteuern der ersten elektrischen Parkbremsstelleinheit ausgelegt ist und keine Ansteuerung der zweiten elektrischen Parkbremsstelleinheit gestattet. Außerdem umfasst das System eine zweite Steuereinheit mit wenigstens einem zweiten Mikroprozessor, wobei die zweite Steuereinheit zum Ansteuern der zweiten elektrischen Parkbremsstelleinheit ausgelegt ist und keine Ansteuerung der ersten elektrischen Parkbremsstelleinheit gestattet. Ferner umfasst das System eine dritte Steuereinheit mit wenigstens einem dritten Mikroprozessor, die dazu ausgelegt ist, ein Automatikgetriebe anzusteuern, das ohne mechanische Getriebesperre ausgebildet ist, wobei die dritte Steuereinheit dazu ausgelegt ist, in einem Getriebesperrenmodus über eine Kommunikationsverbindung mit der ersten Steuereinheit zu kommunizieren, um diese zur Ansteuerung der ersten elektrischen Parkbremsstelleinheit auf der Grundlage eines Getriebesperrbefehls zu veranlassen. Weitere Merkmale des erfindungsgemäßen Systems sind im Anspruch 1 enthalten.

Die elektrischen Parkbremsstelleinheiten können auf einem elektromechanischen Prinzip basieren. In andere Varianten können die elektrischen Parkbremsstelleinheiten elektrohydraulisch oder elektropneumatisch betrieben werden.

Das Kraftfahrzeug-System gemäß dem ersten Aspekt kann ferner ein Steuerleitungssystem umfassen, welches die erste Steuereinheit und die zweite Steuereinheit auf der einen Seite mit der ersten elektrischen Parkbremsstelleinheit und der zweiten elektrischen Parkbremsstelleinheit auf der anderen Seite verbindet. Das Steuerleitungssystem kann aus einer ersten Steuerleitung zwischen der ersten Steuereinheit und der ersten elektrischen Parkbremsstelleinheit sowie einer zweiten Steuerleitung zwischen der zweiten Steuereinheit und der zweiten elektrischen Parkbremsstelleinheit bestehen.

So kann insbesondere bei dem System gemäß dem ersten Aspekt keine weitere Steuerleitung vorhanden sein, welche die erste Steuereinheit mit der zweiten elektrischen Parkbremsstelleinheit und/oder die zweite Steuereinheit mit der ersten elektrischen Parkbremsstelleinheit verbindet.

Bei dem Kraftfahrzeug-System gemäß dem ersten Aspekt kann ferner ein Ansteuersystem vorgesehen sein, welches zur Ansteuerung der ersten elektrischen Parkbremsstelleinheit und der zweiten elektrischen Parkbremsstelleinheit vorgesehen ist. Das Ansteuersystem kann aus der ersten Steuereinheit und der zweiten Steuereinheit bestehen. So kann insbesondere keine weitere Steuereinheit im Fahrzeug vorgesehen sein, welche eine Ansteuerung der ersten elektrischen Parkbremsstelleinheit und/oder der zweiten elektrischen Parkbremsstelleinheit gestattet.

Bei dem System gemäß dem ersten Aspekt kann eine der ersten und zweiten Steuereinheiten ausgelegt sein, ein Antiblockier- und/oder Fahrdynamikregelsystem anzusteuern. Gleichermaßen kann gemäß diesem Aspekt eine der ersten und zweiten Steuereinheiten ausgelegt sein, einen elektrischen Bremskrafterzeuger anzusteuern.

In dem hier beschriebenen Aspekt kann der elektrische Bremskrafterzeuger eine dritte elektrische Stelleinheit umfassen, die ausgebildet ist, zur Erzeugung wenigstens eines Bremskraftanteils auf einen Hauptzylinder eines elektrohydraulischen Bremssystems einzuwirken. Der elektrische Bremskrafterzeuger kann als Bremskraftverstärker eingesetzt werden, um einen vom Fahrer mechanisch in den Hauptzylinder eingeleiteten Bremskraftanteil elektrisch zu verstärken. Alternativ hierzu kann die dritte elektrische Stelleinheit dazu ausgebildet sein, die gesamte Bremskraft durch Einwirken auf den Hauptzylinder zu erzeugen (beispielsweise im Rahmen eines autonomen Fahrens oder in einem Brake-By-Wire-Betrieb).

Bei dem erfindungsgemäßen System ist eine Eingabe-Einrichtung vorhanden, die ausgebildet ist, eine Parkbremsanforderung zu erzeugen. Die Eingabe-Einrichtung kann beispielsweise eine von einem Fahrer bedienbarer Taster, Schalter, usw. sein. Die Eingabe-Einrichtung ist zumindest mit der ersten Steuereinheit elektrisch gekoppelt, um der ersten Steuereinheit die Parkbremsanforderung zu signalisieren. Zusätzlich hierzu kann die Eingabe-Einrichtung mit der zweiten Steuereinheit elektrisch gekoppelt sein, um der zweiten Steuereinheit den Parkbremsbefehl zu signalisieren. Die erste Steuereinheit ist dazu ausgebildet, die erste elektrische Parkbremsstelleinheit in Abhängigkeit des Parkbremsbefehls anzusteuern. In gleicher Weise ist die zweite Steuereinheit ausgebildet, die zweite elektrische Parkbremsstelleinheit in Abhängigkeit des Parkbremsbefehls anzusteuern.

Der Parkbremsbefehl kann allgemein auf ein Aktivieren (also Zuspannen) oder ein Lösen der Parkbremse gerichtet sein. Dementsprechend kann die Ansteuerung der jeweiligen Steuereinheit auf ein Aktivieren oder Lösen der entsprechenden Parkbremsstelleinheit gerichtet sein.

Bei dem vorgestellten Aspekte kann ferner eine Kommunikationsverbindung zwischen der ersten Steuereinheit und der zweiten Steuereinheit (und optional vorgesehenen weiteren Steuereinheiten) vorgesehen sein. Die erste Steuereinheit und die zweite Steuereinheit (sowie optional vorgesehene weitere Steuereinheiten) können dazu ausgelegt sein, über die Kommunikationsverbindung miteinander zu kommunizieren. Die Kommunikationsverbindung kann redundant ausgelegt sein. Beispielsweise können zwei parallel zueinander ausgebildete Bus- oder Leitungssysteme vorgesehen werden.

Die erste Steuereinheit kann dazu ausgelegt sein, den Parkbremsbefehl über die Kommunikationsverbindung an die zweite Steuereinheit zu kommunizieren. Mittels dieser Kommunikation kann die erste Steuereinheit insbesondere die zweite Steuereinheit zur Ansteuerung der zweiten elektrischen Parkbremsstelleinheit auf der Grundlage des Parkbremsbefehls veranlassen.

Gemäß dem ersten Aspekt des hier beschriebenen Kraftfahrzeug-Systems kann der Getriebesperremodus insbesondere dadurch aktiviert werden, dass eine dem Getriebe zugeordnete Eingabe-Einrichtung vom Fahrer in eine Parkstellung gebracht wird. Der Getriebesperremodus umfasst auch die Situation, dass die entsprechende Eingabe-Einrichtung des Automatikgetriebes von der Parkstellung in eine Fahrstellung gebracht wird. Mit der Eingabe-Einrichtung lassen sich damit unter schiedliche Getriebesperrebefehle erzeugen, je nachdem, ob die Parkstellung eingenommen oder verlassen wird. Während im ersten Fall die Parkbremsstelleinheiten aktiviert werden, wird im zuletzt genannten Fall ein Lösen der Parkbremsstelleinheiten in die Wege geleitet.

Bei dem hier vorgestellten Aspekte kann das System ferner ein erstes elektrisches Versorgungssystem (beispielsweise in Gestalt einer Batterie oder eines Akkumulators) für die erste Steuereinheit und/oder die erste elektrischen Parkbremsstelleinheit umfassen. In gleicher Weise kann ein zweites elektrisches Versorgungssystem für die zweite Steuereinheit und/oder die zweite elektrische Parkbremsstelleinheit vorhanden sein.

Das erste Fahrzeugrad kann allgemein ein rechtes Vorderrad sein. Das zweite Fahrzeugrad kann ein linkes Vorderrad sein. In anderen Varianten kann das erste Fahrzeugrad ein rechtes Hinterrad sein, während das zweite Fahrzeugrad ein linkes Hinterrad ist.

Ferner kann wenigstens ein elektrischer Generator vorgesehen sein. Die Funktion des wenigstens einen Generators kann von einem elektrischen Antrieb des Kraftfahrzeugs bereitgestellt werden (der dann im Generatorbetrieb arbeitet) oder von einer ausschließlich im Generatorbetrieb betriebenen elektrischen Maschine.

Ein elektrischer Generator kann pro Fahrzeugachse oder pro Fahrzeugrad vorgesehen sein. In einer Variante ist der wenigstens eine elektrische Generator mit dem rechten Hinterrad und/oder dem linken Hinterrad des Fahrzeugs koppelbar. In einer alternativen oder kumulativen Ausgestaltung ist der wenigstens eine elektrische Generator mit dem rechten Vorderrad und/oder dem linken Vorderrad des Fahrzeugs koppel-bar.

Eine derartige Kopplung kann insbesondere selektiv dann vorgenommen werden, wenn mittels des Generatorbetriebs eine Bremswirkung an dem entsprechenden Hinterrad erzeugt werden soll (z. B. im Rahmen eines autonomen Fahrens, einschließlich eines autonomen Einparkens).

Allgemein sind die erste Steuereinheit und die zweite Steuereinheit räumlich getrennt voneinander vorgesehen. Diese räumliche Trennung wird durch separate Gehäuse für die Steuereinheiten bewerkstelligt. Auch sind die einzelnen Steuereinheiten an unterschiedlichen Orten im Fahrzeug verbaut.

Gemäß der Erfindung wird gemäß einem zweiten Aspekt ein Verfahren zum Ansteuern eines Kraftfahrzeug-Systems nach Anspruch 11 angegeben, das u.a. eine erste elektrische Parkbremsstelleinheit, die einem ersten Fahrzeugrad zugeordnet ist, eine zweite elektrische Parkbremsstelleinheit, die einem zweiten Fahrzeugrad zugeordnet ist, eine erste Steuereinheit mit wenigstens einem ersten Mikroprozessor, wobei die erste Steuereinheit zum Ansteuern der ersten elektrischen Parkbremsstelleinheit ausgelegt ist und keine Ansteuerung der zweiten elektrischen Parkbremsstelleinheit gestattet, und eine zweite Steuereinheit mit wenigstens einem zweiten Mikroprozessor, wobei die zweite Steuereinheit zum Ansteuern der zweiten elektrischen Parkbremsstelleinheit ausgelegt ist und keine Ansteuerung der ersten elektrischen Parkbremsstelleinheit gestattet, umfasst. Ferner umfasst das Kraftfahrzeug-System eine dritte Steuereinheit mit wenigstens einem dritten Mikroprozessor, die dazu ausgelegt ist, ein Automatikgetriebe anzusteuern, das ohne mechanische Getriebesperre ausgebildet ist, wobei die dritte Steuereinheit dazu ausgelegt ist, in einem Getriebesperrenmodus über eine Kommunikationsverbindung mit der ersten Steuereinheit zu kommunizieren, um diese zur Ansteuerung der ersten elektrischen Parkbremsstelleinheit auf der Grundlage eines Getriebesperrbefehls zu veranlassen. Das Verfahren umfasst u.a. die Schritte des Ansteuerns der ersten elektrischen Parkbremsstelleinheit mittels der ersten Steuereinheit, ohne mittels der ersten Steuereinheit die zweite elektrische Parkbremsstelleinheit anzusteuern, sowie des Ansteuerns der zweiten elektrischen Parkbremsstelleinheit mittels der zweiten Steuereinheit, ohne mittels der zweiten Steuereinheit die erste elektrische Parkbremsstelleinheit anzusteuern, wobei in einem Getriebesperrenmodus die dritte Steuereinheit über eine Kommunikationsverbindung mit der ersten Steuereinheit kommuniziert und diese zur Ansteuerung der ersten elektrischen Parkbremsstelleinheit auf der Grundlage eines Getriebesperrbefehls veranlasst. Weitere Merkmale sind Anspruch 11 zu entnehmen.

Die Ansteuerschritte des Verfahrens gemäß dem zweiten Aspekt können im Wesentlichen gleichzeitig durchgeführt werden. Ferner kann das Verfahren das Erfassen eines Ansteuerbefehls umfassen, wobei der Ansteuerbefehl eine Parkbremsanforderung seitens des Fahrers, eine Getriebesperranforderung seitens des Fahrers oder eine Notbremsanforderung ist. Weiter erfolgt das Ansteuern der ersten elektrischen Parkbremsstelleinheit und der zweiten elektrischen Parkbremsstelleinheit auf das Erfassen des Ansteuerbefehls.

Gemäß einem weiteren Aspekt wird ein Computerprogramm mit Programmcode angegeben zum Durchführen des Verfahrens gemäß dem zweiten Aspekt, wenn das Verfahren von der ersten Steuereinheit und der zweiten Steuereinheit durchgeführt wird. Auch wird ein Steuergerätesystem angegeben, welches das Computerprogramm sowie die erste Steuereinheit und die zweite Steuereinheit, die zum Ausführen des Computerprogramms ausgebildet sind, umfasst.

### Kurze Beschreibung der Zeichnungen

Weitere Aspekte, Einzelheiten und Vorteile der vorliegenden Offenbarung ergeben sich aus der nachfolgenden Beschreibung von Ausführungsbeispielen unter Bezugnahme auf die Figuren. Es zeigen:
Fig. 1 : ein erfindungsgemäßes Ausführungsbeispiel eines redundant ausgelegten Fahrzeug-Systems;
Fig. 2 : ein nicht unter den Schutzumfang des Patents fallendes Ausführungsbeispiel eines redundant ausgelegten Fahrzeug-Systems;
Fig. 3 : ein Ausführungsbeispiel einer Steuereinheit, insbesondere für ein Fahrzeug-System; und
Fign. 4 & 5 : Ablaufdiagramme von Verfahren gemäß Ausführungsbeispielen der vorliegenden Offenbarung

### Detaillierte Beschreibung

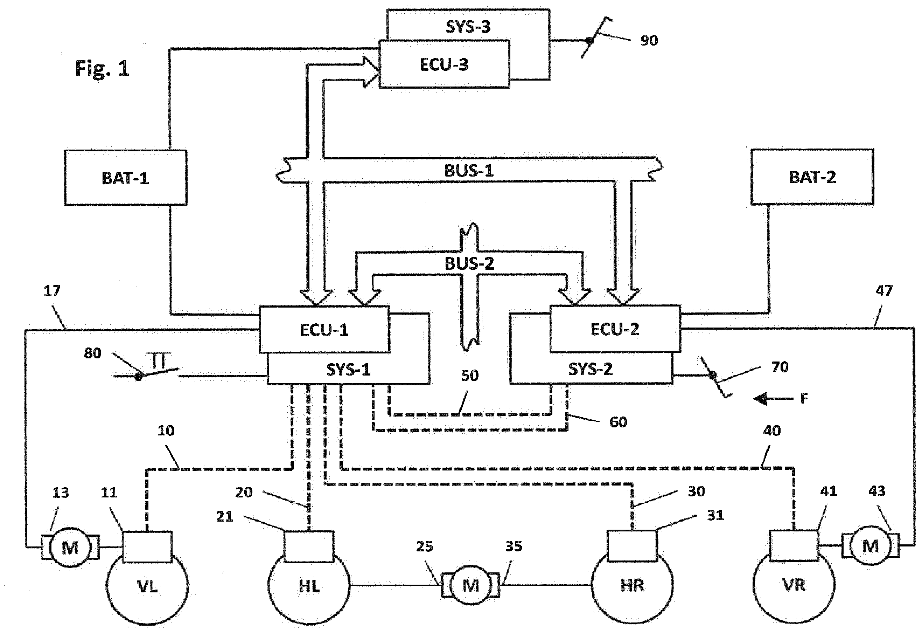

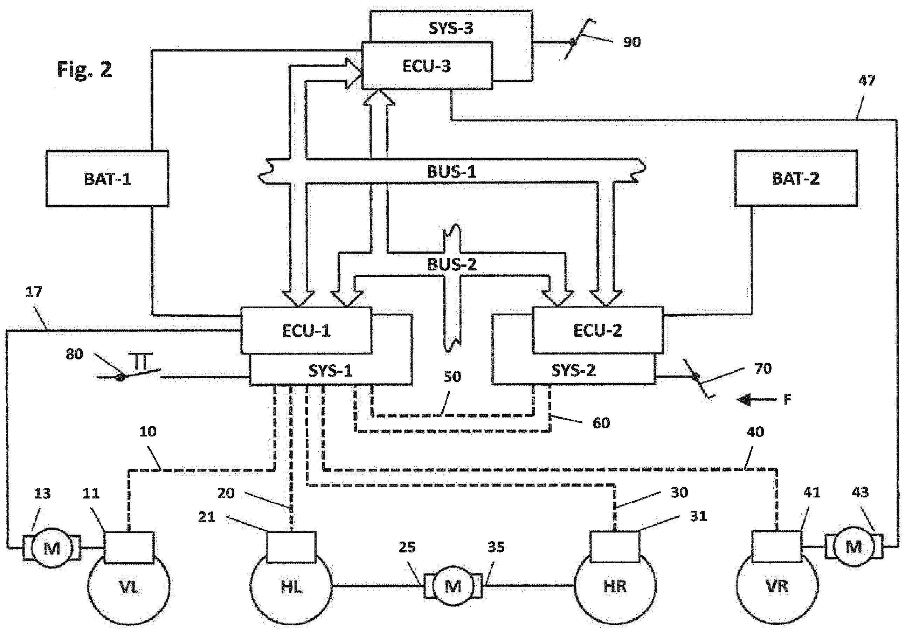

Ausführungsbeispiele der vorliegenden Offenbarung werden nachfolgend anhand der Zeichnungen erläutert, wobei in Fig. 1 und Fig. 2 jeweils ein elektronisch gesteuertes Fahrzeug-System schematisch dargestellt ist.

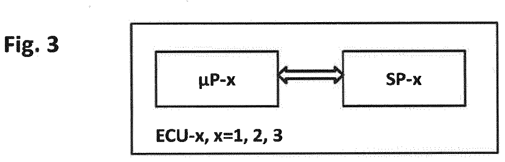

Das jeweilige System gemäß Fig. 1 und Fig. 2 umfasst ein erstes Teilsystem SYS-1 und ein zweites Teilsystem SYS-2. Das erste Teilsystem SYS-1 umfasst eine erste elektronische Steuereinheit (Electronic Control Unit, ECU) ECU-1 und das zweite Teilsystem SYS-2 umfasst eine zweite elektronische Steuereinheit ECU-2. Jede der beiden Steuereinheiten ECU-1 und ECU-2 umfasst wenigstens einen Mikroprozessor µP und wenigstens eine Speichereinrichtung SP, wie in Fig. 3 dargestellt. Die jeweilige Speichereinrichtung SP, beispielsweise ein Halbleiterspeicher, enthält Programmcode zur Ausführung durch den jeweiligen Mikroprozessor µP.

Für eine elektrische Energieversorgung der beiden Teilsysteme SYS-1 und SYS-2 einschließlich der beiden elektronischen Steuereinheiten ECU-1 und ECU-2 werden jeweils ein erster Akkumulator BAT-1 und ein zweiter Akkumulator BAT-2 verwendet. Die erste elektronische Steuereinheit ECU-1 und ggf. weitere Komponenten des ersten Teilsystems SYS-1 werden (wenigstens) an dem ersten Akkumulator BAT-1 betrieben; die zweite elektronische Steuereinheit ECU-2 und ggf. weitere Komponenten des zweiten Teilsystems SYS-2 werden (wenigstens) an dem zweiten Akkumulator BAT-2 betrieben. Dadurch besitzt das Gesamtsystem eine hohe Betriebssicherheit, da bei einem fehlerhaften ersten Ackumulator BAT-1 (wenigstens) die zweite elektronische Steuereinheit ECU-2 (und ggf. das gesamte zweite Teilsystem SYS-2) weiter betrieben werden kann. Ebenso kann bei einem fehlerhaften zweiten Akkumulator BAT-2 (wenigstens) die erste elektronische Steuereinheit ECU-1 (und ggf. das gesamte erste Teilsystem SYS-1) weiter betrieben.

Zur Kommunikation (z. B. für Datenübertragungen, Übertragungen von Ansteuerbefehlen, usw.) zwischen den beiden Teilsystemen SYS-1 und SYS-2 und insbesondere zwischen den beiden elektronischen Steuereinheiten ECU-1 und ECU-2 sind ein erstes Bussysteme BUS-1 und ein zweites Bussystem BUS-2 vorgesehen. Für eine hohe Betriebssicherheit des Gesamtsystems sind die beiden Bussysteme BUS-1 und BUS-2 in Bezug auf die beiden Teilsysteme SYS-1 und SYS-2 (insbesondere in Bezug auf die beiden elektronischen Steuereinheiten ECU-1 und ECU-2) in redundanter Weise parallel angeordnet. So kann bei einem fehlerhaften Bussystem BUS-1 oder BUS-2 mittels des anderen Bussystems BUS-2 oder BUS-1 die Kommunikation weiter aufrechterhalten werden. Da Fahrzeuge heute ohnehin mit Bussystemen, z.B. einem CAN-Bus (Controller Area Network), ausgestattet sind, können solche für zumindest eines der beiden Bussysteme BUS-1 und BUS-2 mitverwendet werden, um zusätzlichen Aufwand einzusparen.

An das erste Teilsystem SYS-1, genauer gesagt an eine hydraulische Steuereinheit (Hydraulic Control Unit, HCU) desselben, sind über Hydraulikleitungen 10, 20, 30 und 40 hydraulisch betätigbare Radbremsen 11, 21, 31 und 41 des Fahrzeugs angeschlossen. Bei dem ersten Teilsystem SYS-1 handelt es sich in den Ausführungsbeispielen um ein elektrohydraulisches System, das ein fahrerunabhängiges, individuelles Erzeugen und Regeln der Bremsdrücke in den Radbremsen 11, 21, 31 und 41 ermöglicht. Das erste Teilsystem SYS-1 kann daher ein Regelsystem sein oder umfassen, beispielsweise ein in Fahrzeugen heute serienmäßiges Antiblockier- und/oder Fahrdynamikregelsystem (ABS bzw. Electronic Stability Control, ESC).

Das zweite Teilsystem SYS-2 ist über Hydraulikleitungen 50, 60 mit dem ersten Teilsystem SYS-1 verbunden. Das zweite Teilsystem SYS-2 ist in den Ausführungsbeispielen dazu ausgelegt, Bremsdrücke für das erste Teilsystem SYS-1 und/oder die Radbremsen 11, 21, 31 und 41 zu erzeugen. Zum Verständnis der Möglichkeiten, die sich aus der vorstehenden und den nachfolgenden "und/oder"-Verknüpfungen zwischen den Begriffen "das erste Teilsystem SYS-1" und "die Radbremsen 11, 21, 31 und 41" ergeben, seien beispielhaft folgende Varianten erläutert:
- Das zweite Teilsystem SYS-2 erzeugt die Bremsdrücke über die Hydraulikleitungen 50, 60 unmittelbar für die Radbremsen 11, 21, 31 und 41, wenn das erste Teilsystem SYS-1 passiv ist, also keine (z. B. überlagernde) radindividuelle Regeleingriffe, wie etwa eine ABS- oder ESC-Regelung, ausgeführt wird.
- Ist jedoch das erste Teilsystem SYS-1 aktiv, um z. B. eine ABS- oder ESC-Regelung auszuführen, so kann in machen Varianten das zweite Teilsystem SYS-2 über die Hydraulikleitungen 50, 60 dem ersten Teilsystem SYS-1 eingangsseitig Bremsdrücke bereit stellen, so dass das erste Teilsystem SYS-1 ausgangsseitig Bremsdrücke für die Radbremsen 11, 21, 31 und 41 radindividuell regeln kann (z. B. durch Halten, Erhöhen oder Erniedrigen des Bremsdrucks). Eine solche Regelung kann auch dann stattfinden, wenn das zweite Teilsystem SYS-2 keine Bremsdrücke bereitstellt. Zu diesem Zweck umfasst das erste Teilsystem SYS-1 einen separaten Bremsdruckgeber (z. B. eine elektrisch betriebene Hydraulikpumpe).
- Da nicht immer an allen Radbremsen gleichzeitig individuelle Regeleingriffe erforderlich sind, z.B. wenn im Rahmen einer ESC-Regelung nur ein kurvenäußeres Vorderrad abzubremsen ist, um ein Untersteuern des Fahrzeugs zu verhindern, sind im praktischen Betrieb Kombinationen der beiden oben genannten Möglichkeiten üblich.

Bei dem zweiten Teilsystem SYS-2 handelt es sich allgemein um einen als Bremsdruckgebersystem ausgelegtes Bremskrafterzeuger, wie etwa eine Baugruppe mit einem elektrischen Bremskraftverstärker (EBB), der bei hydraulischer Systemauslegung auf einen Hauptzylinder einwirkt. Das zweite Teilsystem SYS-2 ist als Bremskrafterzeuger dazu ausgebildet, eine oder mehrere der folgenden Funktionen zu erfüllen:
- einen vom Fahrer über ein Bremspedal 70 angeforderten Bremswunsch zu erfassen, der auf eine Verzögerung des Kraftfahrzeugs gerichtet ist;
- eine vom Fahrer über das Bremspedal 70 eingeleitete Betätigungskraft F mittels einer elektrischen Stelleinheit nach elektrischem, elektrohydraulischem
- oder elektropneumatischem Prinzip zu verstärken;
- die Bremsdrücke für das erste Teilsystem SYS-1 und/oder die Radbremsen 11, 21, 31 und 41 mittels einer elektrischen Stelleinheit nach elektrischem, elektrohydraulischem oder elektropneumatischem Prinzip zu erzeugen.

So kann das zweite Teilsystem SYS-2 unter anderem in einer oder mehreren der folgenden Betriebsarten betrieben werden:
- Für die Funktion einer hydraulischen Betriebsbremse, also bei Normalbremsungen, wird die vom Fahrer über das Bremspedal 70 aufgebrachte Betätigungskraft F insbesondere mittels einer elektrischen Stelleinheit verstärkt, wobei in einem Hauptzylinder die Bremsdrücke für das erste Teilsystem SYS-1 und/oder die Radbremsen 11, 21, 31 und 41 in Abhängigkeit der verstärkten Betätigungskraft, vorzugsweise gemäß einer vorherbestimmten Verstärkerkennlinie, erzeugt werden.
- Ist das Bremssystem und insbesondere das zweite Teilsystem SYS-2 als BBW-System (Brake By Wire) ausgelegt, so wird für die Funktion der Betriebsbremse und damit für Normalbremsungen der vom Fahrer über das Bremspedal 70 eingeleitete Verzögerungswunsch erfasst, um in dessen Abhängigkeit Bremsdrücke für das erste Teilsystem SYS-1 und/oder die Radbremsen 11, 21, 31 und 41 zu erzeugen. Dabei wird der Verzögerungswunsch mittels einer geeigneten Sensorik, die die am Bremspedal 70 eingeleitete Kraft- und/oder Wegcharakteristik erfasst, ermittelt. Der Verzögerungswunsch wird dann von der elektronischen Steuereinheit ECU-2 in ein Ansteuersignal für eine elektrische Stelleinheit umgesetzt, die auf einen Hauptzylinder einwirkt. Das Bremspedal 70 bleibt hingegen vom Hauptzylinder entkoppelt. Ein Simulator kann dem Fahrer trotz der Entkopplung ein konventionelles Pedalgefühl vermitteln.
- Für den Fall einer Notbremsung, beispielsweise einer Bremsung, die trotz eines fehlerhaften Akkumulators BAT-2 gewährleistet sein muss, werden die Bremsdrücke für das erste Teilsystem SYS-1 und/oder die Radbremsen 11, 21, 31 und 41 entweder entsprechend einer gegenüber Normalbremsungen reduzierten Verstärkerkennlinie oder unmittelbar in Abhängigkeit der vom Fahrer über das Bremspedal 70 in den Hauptzylinder eingeleiteten Betätigungskraft F erzeugt. Dies geschieht bei einem BBW-System z. B. gemäß dem Push-Through-Prinzip, bei dem die Entkopplung von Bremspedal 70 und Hauptzylinder aufgehoben wird.
- Für den Fall einer automatischen Bremsung, also einer Bremsung, die unabhängig von einer vom Fahrer über das Bremspedal 70 eingeleiteten Betätigung erfolgt, werden die Bremsdrücke für das erste Teilsystem SYS-1 und/oder die Radbremsen 11, 21, 31 und 41 in Abhängigkeit der für die automatische Bremsung angeforderten Parameter, z. B. Fahrzeugverzögerung und Fahrzeuggeschwindigkeit, erzeugt. Automatische Bremsungen finden z. B. im Rahmen einer als ACC-Funktion (Adaptive Cruise Control) bekannten adaptiven Regelung der Fahrzeuggeschwindigkeit oder einer als ESC-Funktion bekannten Fahrdynamikregelung, sowie beim autonomen Fahren im AD-Betrieb (Autonomous Driving) oder RCP-Betrieb (Remote Controlled Parking) des Fahrzeugs statt.
- Für den Fall einer regenerativen Bremsung, also einer Bremsung, bei der die beim Bremsen abgebaute kinetische Energie eines Elektro- oder Hybridfahrzeugs in elektrische Energie umgewandelt und in einen Akkumulator (z .B. BAT-1 und/oder BAT-2) oder dergleichen zurückgespeist wird, wird zunächst, sofern es sich nicht um eine automatische Bremsung handelt, der vom Fahrer über das Bremspedal 70 eingeleitete Verzögerungswunsch ermittelt. In dessen Abhängigkeit wird ein elektrischer Antrieb 25, 35 des Fahrzeugs, der hier auf die beiden hinteren Räder HL und HR wirkt, als Generator betrieben. Handelt es sich demgegenüber um eine automatische Bremsung, so erfolgt der Generatorbetrieb des elektrischen Antriebs 25, 35 in Abhängigkeit des für die automatische Bremsung erforderlichen Verzögerung. Wenn das regenerative Bremsmoment nicht ausreichend ist, also der Verzögerungswunsch (keine automatische Bremsung) oder die erforderliche Verzögerung (automatische Bremsung) größer als die im Generatorbetrieb maximal erreichbare Verzögerung ist, wird zur Kompensation zusätzlich ein hydraulisches Bremsmoment aufgebracht, indem entsprechende Bremsdrücke für das erste Teilsystem SYS-1 und/oder die Radbremsen 11, 21, 31 und 41 erzeugt und eingestellt werden. Es sei angemerkt, dass der elektrische Antrieb des Fahrzeugs natürlich auch anstatt auf die beiden hinteren Räder HL, HR auch auf die beiden vorderen Räder VL, VR oder auf alle vier Räder VL, VR, HL, HR wirken kann.

Sofern das erste Teilsystem SYS-1 dazu eingerichtet ist, Bremsdrücke nach einem elektrohydraulischen Prinzip selbst zu erzeugen, was beispielsweise bei einem ESC-System regelmäßig der Fall ist, kann das erste Teilsystem SYS-1 Bremsdrücke in einer oder mehreren der Radbremsen 11, 21, 31 und 41 unabhängig von dem zweiten Teilsystem SYS-2 erzeugen und einstellen. Von daher ist es in bestimmten Ausführungsvarianten möglich, dass automatische Bremsungen, insbesondere die ACC- und ESC-Funktion, vom ersten Teilsystem SYS-1 autark ausgeführt werden. Ein weiterer Aspekt in diesem Zusammenhang ist, dass in diesem Fall eine hydraulische Betätigung der Radbremsen 11, 21, 31 und 41 auch trotz eines fehlerhaften zweiten Teilsystems SYS-2 oder trotz fehlerhafter Hydraulikleitungen 50, 60 gewährleistet ist, wodurch sich die Betriebssicherheit des Bremssystems erhöht.

Des Weiteren ist das jeweils in Fig. 1 und Fig. 2 dargestellte Bremssystem für die Funktion einer Parkbremse (auch Feststellbremse genannt) mit einem EPB-System ausgestattet, um das Fahrzeug im EPB-Modus sicher im Stillstand halten zu können. Das EPB-System umfasst eine erste elektrische, vorzugsweise elektromechanische Stelleinheit 13 und eine zweite elektrische, vorzugsweise elektromechanische Stelleinheit 43. Die erste Stelleinheit 13 wirkt auf die dem vorderen Rad VL zugeordnete Radbremse 11 und die zweite Stelleinheit 43 auf die dem vorderen Rad VR zugeordnete Radbremse 41. Das EPB-System selbst umfasst in den Ausführungsbeispielen keine eigene elektronische Steuereinheit (also keinen eigenen Mikroprozessor µP und keine eigene Speichereinrichtung SP), da gemäß Fig. 1 die erste Stelleinheit 13 über eine Steuerleitung 17 von der elektronischen Steuereinheit ECU-1 des ersten Teilsystems SYS-1 und die zweite Stelleinheit 43 über eine Steuerleitung 47 von der elektronischen Steuereinheit ECU-2 des zweiten Teilsystems SYS-2 angesteuert werden kann. Demgemäß ist der entsprechende Programmcode zum Betreiben des EPB-Systems in den Speichereinrichtungen SP-1 und SP-2 des ersten bzw. zweiten Teilsystems SYS-1 bzw. SYS-2 hinterlegt und wird durch den entsprechenden Mikroprozessor µP-1 bzw. µP-2 ausgeführt (vgl. Fig. 3).

Das EPB-System umfasst als Eingabe-Einrichtung ein Betätigungselement 80 (z. B. einen Schalter oder Taster), über das der Fahrer seinen Ansteuerbefehl eingibt. Der Ansteuerbefehl - typischerweise "Feststellbremse schließen" oder "Feststellbremse öffnen" - wird hier von der ersten elektronischen Steuereinheit ECU-1 erfasst und ausgewertet. Gemäß dem Ergebnis der Auswertung wird die erste Stelleinheit 13 der dem vorderen Rad VL zugeordneten Radbremse 11 betätigt. Da die Betätigung der zweiten Stelleinheit 43 der dem vorderen Rad VR zugeordneten Radbremse 41 gemäß Fig. 1 seitens der zweiten elektronischen Steuereinheit ECU-2 erfolgt, wird der Ansteuerbefehl über das erste Bussystem BUS-1 und/oder das zweite Bussystem BUS-2 von der ersten elektronischen Steuereinheit ECU-1 zu der zweiten elektronischen Steuereinheit ECU-2 übertragen. Aufgrund der parallel angeordneten Bussysteme BUS-1 und BUS-2 besteht Redundanz, so dass eine fehlertolerante Kommunikation unter den elektronischen Steuereinheiten ECU-1 und ECU-2 gewährleistet ist.

Auch ist es möglich, das EPB-System (also insbesondere die Parkbremsstelleinheiten 13, 43) unabhängig von einer Betätigung des Bedienelementes 80, also unabhängig vom Ansteuerwunsch des Fahrers zu betätigen. Dies erfolgt z. B. im Rahmen einer als HH-Funktion (Hill Holder) bekannten Berganfahrhilfe, die durch automatisches Schließen der Parkbremse ein Wegrollen des Fahrzeugs auf einer geneigten Fahrbahn verhindert und durch automatisches Öffnen der Parkbremse (beispielsweise in Abhängigkeit des Neigungswinkels und/oder dem vom Antriebsmotor des Fahrzeugs bereitgestellten Drehmoment) ein komfortables Anfahren des Fahrzeugs auf der geneigten Fahrbahn ermöglicht. Ferner können von dem EPB-System Bremsungen oder Notbremsungen selbstständig ausgeführt werden, insbesondere als Rückfallebene beispielsweise im AD- oder RCP-Betrieb.

Über die beiden Bussysteme BUS-1 und BUS-2 können die Teilsysteme SYS-1 und SYS-2 mit weiteren Fahrzeugsystemen, beispielsweise einem in Fig. 1 und Fig. 2 dargestellten dritten Teilsystem SYS-3, kommunizieren. Das dritte Teilsystem SYS-3 umfasst eine dritte elektronische Steuereinheit ECU-3 (mit zugeordnetem Mikroprozessor µP-3 und zugeordneter Speichereinrichtung SP-3; vgl. Fig. 3). Es wird hier (wenigstens) an dem ersten Akkumulator BAT-1 betrieben. Zur Kommunikation mit den beiden Teilsystemen SYS-1 und SYS-2 (und insbesondere den beiden elektronischen Steuereinheiten ECU-1 und ECU-2) ist gemäß Fig. 1 das dritte Teilsystem SYS-3 (und insbesondere die dritte elektronische Steuereinheit ECU-3) beispielhaft an das erste Bussystem BUS-1 angeschlossen.

Bei dem dritten Teilsystem SYS-3 handelt es sich in einer Ausführungsvariante um ein elektronisch gesteuertes Automatikgetriebe, das vom Fahrer über eine als Betätigungselement 90 (beispielsweise einen Wählhebel oder ein Wählrad) ausgebildete Eingabe-Einrichtung bedient wird. In der Park- oder P-Stellung des Betätigungselements 90 muss eine zusätzliche Sicherung des Fahrzeugs bewirkt werden, wozu herkömmlicherweise eine mechanische Sperre im Getriebe vorgesehen ist. Der Aufwand für eine solche mechanische Getriebesperre kann eingespart werden, indem das EPB-System (also insbesondere die Parkbremsstelleinheiten 13, 43) diese Funktion übernimmt. Es erfolgt also dann, wenn am Betätigungselement 90 die P-Stellung gewählt ist, ein automatisches Schließen der Parkbremse, und dann, wenn am Betätigungselement 90 die P-Stellung verlassen wird, ein automatisches Öffnen der Parkbremse.

Dazu wird die Stellung des Betätigungselements 90 von der dritten elektronischen Steuereinheit ECU-3 erfasst, ausgewertet und über das erste Bussystem BUS-1 parallel an die erste elektronische Steuereinheit ECU-1 und die zweite elektronische Steuereinheit ECU-2 übertragen, so dass von diesen gemäß Fig. 1 die erste Stelleinheit 13 der dem vorderen Rad VL zugeordneten Radbremse 11 und die zweite Stelleinheit 43 der dem vorderen Rad VR zugeordneten Radbremse 41 entsprechend betätigt werden können. Aufgrund der oben geschilderten Redundanzen kann somit immer wenigstens eine der beiden Stelleinheiten 13 und/oder 43 des EPB-Systems betätigt werden, um die Funktion der Getriebesperre mit Sicherheit zu gewährleisten.

Da aufgrund der bestehenden Redundanz immer wenigstens eine der beiden Stelleinheiten 13 und/oder 43 des EPB-Systems betätigt werden kann, kann das EPB-System neben der Funktion der Getriebesperre auch weitere Sicherheitsfunktionen übernehmen. Dies ist z. B. beim hochautomatisierten Fahren, insbesondere beim RCP-Betrieb des Fahrzeugs, der Fall, wenn das Fahrzeug ohne Einflussmöglichkeit des Fahrers fahren, steuern und einparken kann. Bei diesen Anwendungen bietet das EPB-System bei Ausfällen des ersten Teilsystems SYS-1 oder des zweiten Teilsystems SYS-2 eine weitere Rückfallebene, um beispielsweise Notbremsungen durchzuführen oder das Fahrzeug im Stillstand halten zu können.

Im Zusammenhang mit hochautomatisiertem Fahren, insbesondere beim RCP-Betrieb (während dessen sich der Fahrer möglicherweise sogar außerhalb des Fahrzeugs befindet), ist die Verfügbarkeit des zweiten Teilsystems SYS-2 ohnehin eingeschränkt, da aufgrund der fehlenden Einflussmöglichkeit des Fahrers keine Betätigung des Bremspedals 70 für Notbremsungen möglich ist. Dies kommt einem teilweisen (mechanischen) Ausfall des zweiten Teilsystems SYS-2 gleich. Allerdings ist dann aber davon auszugehen, dass die zugehörige elektronische Steuereinheit ECU-2 funktionsfähig ist, um wenigstens die zweite Stelleinheit 43 des EPB-Systems über die Steuerleitung 47 ansteuern zu können, falls es zu einem (vollständigen) Ausfall des ersten Teilsystems SYS-1 kommen sollte.

Für eine noch höhere Sicherheit kann gemäß Fig. 2 vorgesehen sein, dass das dritte Teilsystem SYS-3 (und insbesondere die dritte elektronische Steuereinheit ECU-3) nicht nur an eines der Bussysteme BUS-1 oder BUS 2 angeschlossen ist, sondern parallel an beide Bussysteme BUS-1 und BUS-2, um eine redundante Kommunikation mit den elektronischen Steuereinheiten ECU-1 und ECU-2 zu gewährleisten. Insbesondere in diesem Zusammenhang kann weiterhin vorgesehen sein, dass eine der Stelleinheiten 13 oder 43 des EPB-Systems von der elektronischen Steuereinheit ECU-3 des dritten Teilsystems SYS-3 direkt angesteuert wird. So ist gemäß Fig. 2 vorgesehen, dass die zweite Stelleinheit 43 des EPB-Systems über die Steuerleitung 47 von der elektronischen Steuereinheit ECU-3 des dritten Teilsystems SYS-3 angesteuert wird. Ein wesentlicher Vorteil des Kraftfahrzeug-Systems gemäß Fig. 2 besteht darin, dass das EPB-System bei (z. B. gleichzeitigen) Ausfällen des ersten Teilsystems SYS-1 und des zweiten Teilsystems SYS-2 eine weitere Rückfallebene in Gestalt des dritten Teilsystems SYS-3 bietet, um beispielsweise Notbremsungen durchzuführen oder das Fahrzeug im Stillstand halten zu können.

Dabei ist bei den Systemen gemäß Fig. 1 und Fig. 2 von Vorteil, wenn wie hier die beiden Stelleinheiten 13 und 43 des EPB-Systems auf die vorderen Räder VL und VR des Fahrzeugs wirken, da diese aufgrund der dynamischen Achslastverteilung einen erheblich größerer Bremskraftanteil als die hinteren Räder des Fahrzeugs übertragen können. Natürlich könnten aber die beiden Stelleinheiten 13 und 43 auch auf die hinteren Räder HL und HR des Fahrzeugs wirken.

Hinsichtlich der elektronischen Steuereinheiten ECU-1 bis ECU-3 ist anzumerken, dass diese - wie in Fig. 3 dargestellt - jeweils wenigstens einen Mikroprozessor µP und wenigstens eine Speichereinrichtung SP umfassen. Die jeweilige Speichereinrichtung SP enthält Programmcode zur Ausführung durch den jeweiligen Mikroprozessor µP im Zusammenhang mit der jeweils gewünschten Funktion (z. B. EPB, Getriebesperre, BBW-Betriebsbremsung, EBB, RCP, usw.). Dabei kann eine einzelne Steuereinheit ECU-1 bis ECU-3 durchaus auch zwei oder mehr dieser Funktionen kombinieren, um die Anzahl an im Fahrzeug erforderlichen Steuereinheiten und die damit verbundenen Kosten zu reduzieren.

Jeder der elektronischen Steuereinheiten ECU-1 bis ECU-3 kann eine eigenständige Baugruppe bilden. So kann jeder der elektronischen Steuereinheiten ECU-1 bis ECU-3 ein eigenes Gehäuse mit eigenen Anschlüssen aufweisen. Auch können die elektronischen Steuereinheiten ECU-1 bis ECU-3 an unterschiedlichen Orten im Fahrzeug verbaut sein.

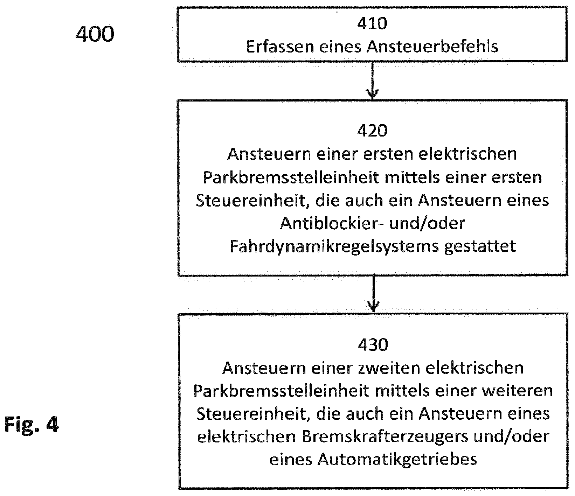

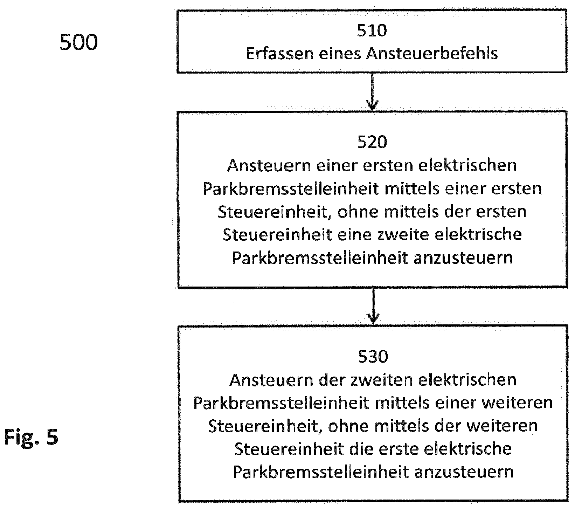

Die Figuren 4 und 5 veranschaulichen in Ablaufdiagramm 400, 500 zwei Beispiele von Verfahren zum Ansteuern eines Kraftfahrzeug-Systems gemäß der vorliegenden Offenbarung. Das jeweilige Verfahren kann von den in den Fign. 1 und 2 dargestellten Systemen oder einem anderweitig konfigurierten System durchgeführt werden.

Unter Bezugnahme auf Fig. 4 wird in einem ersten Schritt 410 ein Ansteuerbefehl erfasst. Der Ansteuerbefehl kann von einer der Steuereinheiten ECU-1 bis ECU-3 oder mehreren dieser Steuereinheiten ECU-1 bis ECU-3 erfasst werden. Bei dem Ansteuerbefehl handelt es sich gemäß einer Variante um einen Parkbremsbefehl seitens des Fahrers (beispielsweise eine Betätigung des Betätigungselements 80). In einer anderen Variante handelt es sich um einen Getriebesperrebefehl seitens des Fahrers (beispielsweise in einem Getriebesperremodus aufgrund einer Betätigung des Betätigungselements 90). In einer weiteren Variante kann es sich bei dem Ansteuerbefehl um einen Notbremsbefehl handeln. Der Notbremsbefehl kann systemseitig erzeugt werden, beispielsweise bei Ausfall einer Bremssystemkomponente.

Auf das Erfassen des Ansteuerbefehls werden in den Schritten 420 und 430 die erste Parkbremsstelleinheit 13 bzw. die zweite Parkbremsstelleinheit 43 angesteuert. Das Ansteuern der beiden Parkbremsstelleinheiten 13, 43 kann gleichzeitig oder sukzessiv erfolgen. Allgemein kann beispielsweise eine erste der Steuereinheiten ECU-1 oder ECU-2 die ihr zugeordnete Parkbremsstelleinheit ansteuern und gleichzeitig einen Ansteuerbefehl über das Bussystem an die zweite der Steuereinheiten ECU-1 oder ECU-2 senden, damit diese die ihr zugeordnete Parkbremsstelleinheit ansteuert.

Konkret wird in Schritt 420 die erste elektrische Parkbremsstelleinheit 13 mittels der ersten Steuereinheit ECU-1 angesteuert. Wie oben geschildert, gestattet die erste Steuereinheit ECU-1 auch ein Ansteuern des Antiblockier- und/oder Fahrdynamikregelung des Teilsystems SYS-1. In Schritt 430 erfolgt ein Ansteuern der zweiten elektrischen Parkbremsstelleinheit 43 mittels der zweiten Steuereinheit ECU-2 (vgl. Fig. 1). Wie bereits geschildert, gestattet diese weitere Steuereinheit ECU-2 auch ein Ansteuern des elektrischen Bremskrafterzeugers innerhalb des Teilsystems SYS-2.

Durch das Integrieren der Parkbremsansteuerfunktionalität in die Steuereinheiten ECU-1 bis ECU-2, die auch für andere Steuerzwecke vorgesehen sind, kann eine separate Parkbrems-Steuereinheit entfallen. Die Systemkosten lassen sich auf diese Weise verringern. Ferner ist durch die Ansteuerbarkeit der beiden Parkbremsstelleinrichtungen 13, 43 mittels unterschiedlicher Steuereinheiten ECU-1 oder ECU-2 eine Redundanz dahingehend gegeben, dass auch bei Ausfall einer der Steuereinheiten ECU-1 oder ECU-2 noch wenigstens eine der Parkbremsstelleinheiten 13, 43 durch die verbleibende Steuereinheit ECU-1 oder ECU-2 ansteuerbar bleibt.

Unter Bezugnahme auf Fig. 5 beginnt das dort dargestellte Verfahren ebenfalls mit dem Erfassen eines Ansteuerbefehls in Schritt 510. Schritt 510 entspricht dem oben bereits erläuterten Schritt 410.

Anschließend erfolgt ein Ansteuern der ersten elektrischen Parkbremsstelleinheit 13 mittels der ersten Steuereinheit ECU-1 in Schritt 520 sowie der zweiten elektrischen Parkbremsstelleinheit 43 mittels einer zweiten Steuereinheit ECU-2. Die beiden Ansteuerschritte 520, 530 können parallel oder nacheinander durchgeführt werden. So kann beispielsweise die erste Steuereinheit ECU-1 die zweite Steuereinheit ECU-2 dazu veranlassen, die Parkbremsstelleinheit 43 anzusteuern.

Da bei den Ausführungsbeispielen der Fign. 1 und 2 lediglich eine einzige Steuerleitung 17, 47 zwischen der Steuereinheit ECU-1 und der Parkbremsstelleinheit 13 sowie zwischen der Steuereinheit ECU-2 und der Parkbremsstelleinheit 43 vorhanden ist, erfolgt das Ansteuern der Parkbremsstelleinheit 13 in Schritt 520 derart, dass die Steuereinheit ECU-1 die Parkbremsstelleinheit 43 nicht ansteuert. In gleicher Weise steuert die weitere Steuereinheit ECU-2 bei einer Ansteuerung der Parkbremsstelleinheit 43 die andere Parkbremsstelleinheit 13 nicht an.

Da die Steuereinheiten ECU-1 und ECU-2 jeweils nur eine einzige der beiden Parkbremsstelleinheiten 13, 43 ansteuern, können die Steuereinheiten kompakter gestaltet werden. Insbesondere benötigt jede dieser Steuereinheiten ECU-1 bis ECU-2 jeweils Ansteuerkomponenten (z. B. Leistungselektronik, H-Brücke, usw.) für lediglich eine einzige Parkbremsstelleinheit 13, 43. Dies spart Bauraum und reduziert ferner die thermische Belastung der jeweiligen Steuereinheit ECU-1 bis ECU-2. Gleichzeitig ist eine Redundanz dahingehend vorhanden, dass bei einem Ausfall einer dieser Steuereinheiten ECU-1 oder ECU-2 die verbleibende Steuereinheit ECU-1 oder ECU-2 noch immer eine Ansteuerung wenigstens noch einer Parkbremsstelleinheit 13, 43 gestatten.

## Patentansprüche

1. System für ein Kraftfahrzeug, umfassend:
a) eine erste elektrische Parkbremsstelleinheit (13), die einem ersten Fahrzeugrad (VL) zugeordnet ist;
b) eine zweite elektrische Parkbremsstelleinheit (43), die einem zweiten Fahrzeugrad (VR) zugeordnet ist;
c) eine erste Steuereinheit (ECU-1) mit wenigstens einem ersten Mikroprozessor (µP), wobei die erste Steuereinheit (ECU-1) zum Ansteuern der ersten elektrischen Parkbremsstelleinheit (13) ausgelegt ist und keine Ansteuerung der zweiten elektrischen Parkbremsstelleinheit (43) gestattet;
d) eine zweite Steuereinheit (ECU-2; ECU-3) mit wenigstens einem zweiten Mikroprozessor (µP), wobei die zweite Steuereinheit (ECU-2; ECU-3) zum Ansteuern der zweiten elektrischen Parkbremsstelleinheit (43) ausgelegt ist und keine Ansteuerung der ersten elektrischen Parkbremsstelleinheit (13) gestattet;
e) wobei die erste und die zweite Steuereinheit (ECU-1, ECU2; ECU-3) separate Gehäuse haben und räumlich getrennt voneinander sind;
f') eine dritte Steuereinheit (ECU-3) mit wenigstens einem dritten Mikroprozessor (µP-3), die dazu ausgelegt ist, ein elektronisch gesteuertes Automatikgetriebe (SYS-3) anzusteuern, das ohne mechanische Getriebesperre ausgebildet ist und vom Fahrer über eine als Betätigungselement (90) ausgebildete Eingabe-Einrichtung bedient wird, wobei die dritte Steuereinheit (ECU-3) die Stellung des Betätigungselements (90) erfasst, auswertet und über ein erstes Bussystem (BUS-1) parallel an die erste und die zweite elektronische Steuereinheit (ECU-1, ECU-2) überträgt, wobei
g') die dritte Steuereinheit (ECU-3) dazu ausgelegt ist, in einem Getriebesperrenmodus, wenn am Betätigungselement (90) die Parkstellung gewählt und damit ein Getriebesperrbefehl erzeugt wird, über die Kommunikationsverbindung in Form des ersten Bussystems (BUS-1) mit der ersten und der zweiten Steuereinheit (ECU-1, ECU-2) zu kommunizieren, um diese zur Ansteuerung und damit Betätigung der elektrischen Parkbremsstelleinheiten (13, 43) der Radbremsen entweder der beiden Vorderräder oder der beiden Hinterräder auf der Grundlage eines Getriebesperrbefehls zu veranlassen,
h) eine Eingabe-Einrichtung (80), die ausgebildet ist, eine Parkbremsanforderung zu erzeugen;
i) wobei die Eingabe-Einrichtung (80) zumindest mit der ersten Steuereinheit (ECU-1) elektrisch gekoppelt ist, um der ersten Steuereinheit (ECU-1) die Parkbremsanforderung zu signalisieren; und
j) die erste Steuereinheit (ECU-1) ausgebildet ist, die erste elektrische Parkbremsstelleinheit (13) in Abhängigkeit der Parkbremsanforderung anzusteuern.

2. System nach Anspruch 1, ferner umfassend
ein Steuerleitungssystem (17, 47), welches die erste Steuereinheit (ECU-1) und die eine zweite Steuereinheit (ECU-2) auf der einen Seite mit der ersten elektrischen Parkbremsstelleinheit (13) und der zweiten elektrischen Parkbremsstelleinheit (43) auf der anderen Seite verbindet, wobei das Steuerleitungssystem (17, 47) aus einer ersten Steuerleitung (17) zwischen der ersten Steuereinheit (ECU-1) und der ersten elektrischen Parkbremsstelleinheit (13) sowie einer zweiten Steuerleitung (47) zwischen der zweiten Steuereinheit (ECU-2) und der zweiten elektrischen Parkbremsstelleinheit (43) besteht;
und/oder
ein Ansteuersystem, welches zur Ansteuerung der ersten elektrischen Parkbremsstelleinheit (13) und der zweiten elektrischen Parkbremsstelleinheit (43) vorgesehen ist, wobei das Ansteuersystem aus der ersten Steuereinheit (ECU-1) und der zweiten Steuereinheit (ECU-2) besteht.

3. System nach einem der vorhergehenden Ansprüche, wobei
eine der ersten und zweiten Steuereinheiten (ECU-1) ausgelegt ist, ein Antiblockier- und/oder Fahrdynamikregelsystem (SYS-1) anzusteuern; und/oder
wobei eine der ersten und zweiten Steuereinheiten (ECU-2) ausgelegt ist, einen elektrischen Bremskrafterzeuger (SYS-2) anzusteuern.

4. System nach Anspruch 1 oder 2, wobei
die zweite Steuereinheit (ECU-2) zum Ansteuern eines elektrischen Bremskrafterzeugers (SYS-2) ausgelegt ist, und wobei die erste Steuereinheit (ECU-1) ausgelegt ist, ein Antiblockier- und/oder Fahrdynamikregelsystem (SYS-1) anzusteuern.

5. System nach Anspruch 3 oder 4, wobei der elektrische Bremskrafterzeuger (SYS-2) umfasst:
eine dritte elektrische Stelleinheit, die ausgebildet ist, zur Erzeugung wenigstens eines Bremskraftanteils auf den Hauptzylinder einzuwirken.

6. System nach einem der vorhergehenden Ansprüche, ferner umfassend
eine Kommunikationsverbindung (BUS-1; BUS-2) zwischen der ersten Steuereinheit (ECU-1) und der zweiten Steuereinheit (ECU-2), wobei die erste Steuereinheit (ECU-1) und die zweite Steuereinheit (ECU-2) dazu ausgelegt sind, über die Kommunikationsverbindung (BUS-1; BUS-2) miteinander zu kommunizieren;
wobei, optional, die Kommunikationsverbindung (BUS-1; BUS-2) redundant ausgelegt ist.

7. System nach Anspruch 6, wobei
die erste Steuereinheit (ECU-1) dazu ausgelegt ist, die Parkbremsanforderung über die Kommunikationsverbindung (BUS-1; BUS-2) an die zweite Steuereinheit (ECU-2) zu kommunizieren.

8. System nach einem der vorhergehenden Ansprüche, ferner umfassend
ein erstes elektrisches Versorgungssystem(BAT-1) für die erste Steuereinheit (ECU-1) und/oder die erste elektrische Parkbremsstelleinheit (13); und
ein zweites elektrisches Versorgungssystem (BAT-2) für die zweite Steuereinheit (ECU-2) und/oder die zweite elektrische Parkbremsstelleinheit (43).

9. System nach einem der vorhergehenden Ansprüche, wobei
das erste Fahrzeugrad ein rechtes Vorderrad (VR) ist und das zweite Fahrzeugrad ein linkes Vorderrad (VL) ist; oder
wobei das erste Fahrzeugrad ein rechtes Hinterrad (HR) und das zweite Fahrzeugrad ein linkes Hinterrad (HR) ist.

10. System nach einem der vorhergehenden Ansprüche, ferner umfassend
wenigstens einen elektrischen Generator (25; 35), der mit einem rechten Hinterrad (HR) und/oder einem linken Hinterrad (HL) des Fahrzeugs koppelbar ist.

11. Verfahren zum Ansteuern eines Systems für ein Kraftfahrzeug nach einem der vorhergehenden Ansprüche, wobei das Verfahren umfasst:
a) Ansteuern der ersten elektrischen Parkbremsstelleinheit (13) mittels der ersten Steuereinheit (ECU-1) auf Erhalt einer Parkbremsenanforderung von einer Eingabe-Einrichtung (80), ohne mittels der ersten Steuereinheit (ECU-1) die zweite elektrische Parkbremsstelleinheit (43) anzusteuern;
b) Übermittlung der Parkbremsenanforderung an die zweite Steuereinheit (ECU-2) über eine Kommunikationsverbindung zwischen der ersten und der zweiten Steuereinheit (ECU-1, ECU-2); und c) Ansteuern der zweiten elektrischen Parkbremsstelleinheit (43) mittels der zweiten Steuereinheit (ECU-2; ECU-3), ohne mittels der zweiten Steuereinheit (ECU-2; ECU-3) die erste elektrische Parkbremsstelleinheit (13) anzusteuern; wobei die beiden Parkbremsstelleinheiten (13, 43) entweder den Vorderrädern oder den Hinterrädern zugeordnet sind und jedes der Parkbremsstelleinheiten (13, 43) einem Rad zugeordnet ist;
d') wobei in einem Getriebesperrenmodus, wenn am Betätigungselement die Parkstellung gewählt und damit ein Getriebesperrbefehl erzeugt wird, die dritte Steuereinheit (ECU-3) über eine Kommunikationsverbindung (BUS-1) in Form eines ersten Bussystems (BUS-1) parallel mit der ersten und der zweiten elektronischen Steuereinheit (ECU-1, ECU-2) kommuniziert und diese zur Ansteuerung der ersten und zweiten elektrischen Parkbremsstelleinheit (13, 43) auf der Grundlage eines Getriebesperrbefehls veranlasst.

12. Verfahren nach Anspruch 11, ferner umfassend
Erfassen eines Ansteuerbefehls, wobei der Ansteuerbefehl eine Parkbremsanforderung seitens des Fahrers, eine Getriebesperranforderung seitens des Fahrers oder eine Notbremsanforderung ist, wobei das Ansteuern der ersten elektrischen Parkbremsstelleinheit (13) und der zweiten elektrischen Parkbremsstelleinheit (43) auf das Erfassen des Ansteuerbefehls erfolgt.

13. Computerprogramm mit Programmcode zum Durchführen des Verfahrens nach Anspruch 11 oder 12, wenn das Verfahren von der ersten Steuereinheit (ECU-1) und der zweiten Steuereinheit (ECU-2) durchgeführt wird.

14. Steuergerätesystem umfassend: das Computerprogramm nach Anspruch 13; und die erste Steuereinheit (ECU-1) und die zweite Steuereinheit (ECU-2), die zum Ausführen des Computerprogramms ausgebildet sind.

## Claims

1. System for a motor vehicle, comprising:
a) a first electric parking brake actuation unit (13) which is assigned to a first vehicle wheel (VL);
b) a second electric parking brake actuation unit (43) which is assigned to a second vehicle wheel (VR);
c) a first control unit (ECU-1) having at least a first microprocessor (µP), wherein the first control unit (ECU-1) is configured to drive the first electric parking brake actuation unit (13) and does not permit driving of the second electric parking brake actuation unit (43);
d) a second control unit (ECU-2; ECU-3) having at least a second microprocessor (µP), wherein the second control unit (ECU-2; ECU-3) is configured to drive the second electric parking brake actuation unit (43) and does not permit driving of the first electric parking brake actuation unit (13);
e) wherein the first and second control units (ECU-1, ECU-2; ECU-3) have separate housings and are spatially separate from one another;
f') a third control unit (ECU-3) having at least a third microprocessor (µP-3), which is configured to drive an electronically controlled automatic transmission (SYS-3) which is embodied without a mechanical gear lock and is operated by the driver by means of an input device in the form of an actuating element (90), wherein the third control unit (ECU-3) detects and evaluates the position of the actuating element (90) and transmits it in parallel to the first and second electronic control units (ECU-1, ECU-2) via a first bus system (BUS-1), wherein
g') the third control unit (ECU-3) is configured, in a gear lock mode, when the parking position is selected at the actuating element (90) and thus a gear lock command is generated, to communicate, via the communication link in the form of the first bus system (BUS-1), with the first and second control units (ECU-1, ECU-2) in order to cause them to drive and thus actuate the electric parking brake actuation units (13, 43) of the wheel brakes of either the two front wheels or the two rear wheels on the basis of a gear lock command,
h) an input device (80) which is designed to generate a parking brake request;
i) wherein the input device (80) is electrically coupled at least to the first control unit (ECU-1) in order to signal the parking brake request to the first control unit (ECU-1); and
j) the first control unit (ECU-1) is designed to drive the first electric parking brake actuation unit (13) as a function of the parking brake request.

2. System according to Claim 1, also comprising:
a control line system (17, 47) which connects the first control unit (ECU-1) and one second control unit (ECU-2) on one side to the first electric parking brake actuation unit (13) and the second electric parking brake actuation unit (43) on the other side, wherein the control line system (17, 47) is composed of a first control line (17) between the first control unit (ECU-1) and the first electric parking brake actuation unit (13) as well as a second control line (47) between the second control unit (ECU-2) and the second electric parking brake actuation unit (43);
and/or
a drive system which is provided for driving the first electric parking brake actuation unit (13) and the second electric parking brake actuation unit (43), wherein the drive system is composed of the first control unit (ECU-1) and the second control unit (ECU-2).

3. System according to one of the preceding claims, wherein
one of the first and second control units (ECU-1) is configured to drive an anti-lock and/or vehicle movement dynamics control system (SYS-1); and/or
wherein one of the first and second control units (ECU-2) is configured to drive an electric braking force generator (SYS-2).

4. System according to Claim 1 or 2, wherein
the second control unit (ECU-2) is configured to drive an electric braking force generator (SYS-2), and wherein the first control unit (ECU-1) is configured to drive an anti-lock and/or vehicle movement dynamics control system (SYS-1).

5. System according to Claim 3 or 4, wherein the electric braking force generator (SYS-2) comprises:
a third electric actuation unit which is designed to act on the master cylinder in order to generate at least a braking force portion.

6. System according to one of the preceding claims, also comprising
a communication link (BUS-1; BUS-2) between the first control unit (ECU-1) and the second control unit (ECU-2), wherein the first control unit (ECU-1) and the second control unit (ECU-2) are configured to communicate with one another via the communication link (BUS-1; BUS-2);
wherein, optionally, the communication link (BUS-1; BUS-2) is of redundant design.

7. System according to Claim 6, wherein
the first control unit (ECU-1) is configured to communicate the parking brake request to the second control unit (ECU-2) via the communication link (BUS-1; BUS-2).

8. System according to one of the preceding claims, also comprising
a first electric supply system (BAT-1) for the first control unit (ECU-1) and/or the first electric parking brake actuation unit (13); and
a second electric supply system (BAT-2) for the second control unit (ECU-2) and/or the second electric parking brake actuation unit (43).

9. System according to one of the preceding claims, wherein
the first vehicle wheel is a right-hand front wheel (VR) and the second vehicle wheel is a left-hand front wheel (VL); or
wherein the first vehicle wheel is a right-hand rear wheel (HR) and the second vehicle wheel is a left-hand rear wheel (HR).

10. System according to one of the preceding claims, also comprising
at least one electric generator (25; 35) which can be coupled to a right-hand rear wheel (HR) and/or to a left-hand rear wheel (HL) of the vehicle.

11. Method for controlling a system for a motor vehicle according to one of the preceding claims, wherein the method comprises:
a) driving the first electric parking brake actuation unit (13) by means of the first control unit (ECU-1) upon receipt of a parking brake request from an input device (80), without driving the second electric parking brake actuation unit (43) by means of the first control unit (ECU-1);
b) transmitting the parking brake request to the second control unit (ECU-2) via a communication link between the first and second control units (ECU-1, ECU-2); and c) driving the second electric parking brake actuation unit (43) by means of the second control unit (ECU-2; ECU-3) without driving the first electric parking brake actuation unit (13) by means of the second control unit (ECU-2; ECU-3); wherein the two parking brake actuation units (13, 43) are assigned either to the front wheels or to the rear wheels and each of the parking brake actuation units (13, 43) is assigned to a wheel;
d') wherein in a gear lock mode, when the parking position is selected at the actuating element and thus a gear lock command is generated, the third control unit (ECU-3) communicates, via a communication link (BUS-1) in the form of a first bus system (BUS-1) with the first and second electronic control units (ECU-1, ECU-2) in parallel and causes them to drive the first and second electric parking brake actuation units (13, 43) on the basis of a gear lock command.

12. Method according to Claim 11, also comprising
registering a drive command, wherein the drive command is a parking brake request by the driver, a gear lock request by the driver or an emergency braking request, wherein the driving of the first electric parking brake actuation unit (13) and of the second electric parking brake actuation unit (43) takes place in response to the registering of the drive command.

13. Computer programme with programme code for carrying out the method according to Claim 11 or 12 when the method is carried out by the first control unit (ECU-1) and the second control unit (ECU-2).

14. Control device system comprising: the computer programme according to Claim 13; and the first control unit (ECU-1) and the second control unit (ECU-2) which are designed to execute the computer programme.

## Revendications

1. Système pour véhicule automobile comprenant :
a) une première unité d'actionnement de frein de stationnement électrique (13) qui est associée à une première roue de véhicule (VL) ;
b) une deuxième unité d'actionnement de frein de stationnement électrique (43) qui est associée à une deuxième roue de véhicule (VR) ;
c) une première unité de commande (ECU-1) comprenant au moins un premier microprocesseur (µP), la première unité de commande (ECU-1) étant réalisée de manière à piloter la première unité d'actionnement de frein de stationnement électrique (13) et ne permettant pas le pilotage de la deuxième unité d'actionnement de frein de stationnement électrique (43) ;
d) une deuxième unité de commande (ECU-2 ; ECU-3) comprenant au moins un deuxième microprocesseur (µP), la deuxième unité de commande (ECU-2 ; ECU-3) étant réalisée de manière à piloter la deuxième unité d'actionnement de frein de stationnement électrique (43) et ne permettant pas le pilotage de la première unité d'actionnement de frein de stationnement électrique (13) ;
e) la première et la deuxième unité de commande (ECU-1, ECU-2 ; ECU-3) présentant des boîtiers distincts et étant séparées l'une de l'autre dans l'espace ;
f') une troisième unité de commande (ECU-3) qui comprend au moins un troisième microprocesseur (µP-3) et qui réalisée de manière à piloter une transmission automatique à commande électronique (SYS-3) réalisée sans verrouillage de transmission mécanique et actionnée par le conducteur au moyen d'un dispositif d'entrée sous forme d'élément d'actionnement (90), la troisième unité de commande (ECU-3) détectant et évaluant la position de l'élément d'actionnement (90) et la transmettant en parallèle à la première et la deuxième unité de commande électronique (ECU-1, ECU-2) par un premier système de bus (BUS-1),
g') la troisième unité de commande (ECU-3), dans un mode de verrouillage de transmission, lorsque la position de stationnement est sélectionnée au niveau de l'élément d'actionnement (90) et qu'une commande de verrouillage de transmission est ainsi générée, étant réalisée de manière à communiquer, via la liaison de communication sous forme du premier système de bus (BUS-1), avec la première et la deuxième unité de commande (ECU-1, ECU-2) pour les amener à piloter et ainsi à actionner les unités d'actionnement de frein de stationnement électrique (13, 43) des freins de roue des deux roues avant ou des deux roues arrière sur la base d'une commande de verrouillage de transmission,
h) un dispositif d'entrée (80) réalisé pour générer une demande de frein de stationnement ;
i) le dispositif d'entrée (80) étant couplé électriquement au moins à la première unité de commande (ECU-1) pour signaler la demande de frein de stationnement à la première unité de commande (ECU-1) ; et
j) la première unité de commande (ECU-1) étant réalisée de manière à piloter la première unité d'actionnement de frein de stationnement électrique (13) en fonction de la demande de frein de stationnement.

2. Système selon la revendication 1, comprenant en outre
un système de conduites de commande (17, 47) qui relie la première unité de commande (ECU-1) et ladite une deuxième unité de commande (ECU-2) d'un côté à la première unité d'actionnement de frein de stationnement électrique (13) et à la deuxième unité d'actionnement de frein de stationnement électrique (43) de l'autre côté, le système de conduites de commande (17, 47) étant composé d'une première conduite de commande (17) entre la première unité de commande (ECU-1) et la première unité d'actionnement de frein de stationnement électrique (13) et d'une deuxième conduite de commande (47) entre la deuxième unité de commande (ECU-2) et la deuxième unité d'actionnement de frein de stationnement électrique (43) ;
et/ou
un système de pilotage qui est prévu pour le pilotage de la première unité d'actionnement de frein de stationnement électrique (13) et de la deuxième unité d'actionnement de frein de stationnement électrique (43), le système de pilotage étant composé de la première unité de commande (ECU-1) et de la deuxième unité de commande (ECU-2).

3. Système selon l'une des revendications précédentes,
l'une parmi la première et la deuxième unité de commande (ECU-1) étant réalisée de manière à piloter un système antiblocage et/ou de régulation de la dynamique de conduite de véhicule (SYS-1) ; et/ou
l'une parmi la première et la deuxième unité de commande (ECU-2) étant réalisée de manière à piloter un générateur de force de freinage électrique (SYS-2).

4. Système selon la revendication 1 ou 2,
la deuxième unité de commande (ECU-2) étant réalisée de manière à piloter un générateur de force de freinage électrique (SYS-2), et la première unité de commande (ECU-1) étant réalisée de manière à piloter un système antiblocage et/ou de régulation de la dynamique de conduite de véhicule (SYS-1).

5. Système selon la revendication 3 ou 4, le générateur de force de freinage électrique (SYS-2) comprenant :
une troisième unité d'actionnement électrique réalisée de manière à agir sur le maître-cylindre pour générer au moins une partie de force de freinage.

6. Système selon l'une des revendications précédentes, comprenant en outre
une liaison de communication (BUS-1 ; BUS-2) entre la première unité de commande (ECU-1) et la deuxième unité de commande (ECU-2), la première unité de commande (ECU-1) et la deuxième unité de commande (ECU-2) étant réalisées de manière à communiquer l'une avec l'autre par l'intermédiaire de la liaison de communication (BUS-1 ; BUS-2) ;
la liaison de communication (BUS-1 ; BUS-2) étant facultativement réalisée de manière à être redondante.

7. Système selon la revendication 6,
la première unité de commande (ECU-1) étant réalisée de manière à communiquer la demande de frein de stationnement à la deuxième unité de commande (ECU-2) via la liaison de communication (BUS-1 ; BUS-2).

8. Système selon l'une des revendications précédentes, comprenant en outre
un premier système d'alimentation électrique (BAT-1) pour la première unité de commande (ECU-1) et/ou la première unité d'actionnement de frein de stationnement électrique (13) ; et
un deuxième système d'alimentation électrique (BAT-2) pour la deuxième unité de commande (ECU-2) et/ou la deuxième unité d'actionnement de frein de stationnement électrique (43).

9. Système selon l'une des revendications précédentes,
la première roue de véhicule étant une roue avant droite (VR) et la deuxième roue de véhicule étant une roue avant gauche (VL) ; ou
la première roue de véhicule étant une roue arrière droite (HR) et la deuxième roue de véhicule étant une roue arrière gauche (HR).

10. Système selon l'une des revendications précédentes, comprenant en outre
au moins un générateur électrique (25 ; 35) qui est apte à être couplé à une roue arrière droite (HR) et/ou à une roue arrière gauche (HL) du véhicule.

11. Procédé de pilotage d'un système pour véhicule automobile selon l'une des revendications précédentes, le procédé comprenant :
a) le pilotage de la première unité d'actionnement de frein de stationnement électrique (13) au moyen de la première unité de commande (ECU-1) lors de la réception d'une demande de frein de stationnement provenant d'un dispositif d'entrée (80) sans piloter la deuxième unité d'actionnement de frein de stationnement électrique (43) au moyen de la première unité de commande (ECU-1) ;
b) la transmission de la demande de frein de stationnement à la deuxième unité de commande (ECU-2) par l'intermédiaire d'une liaison de communication entre la première et la deuxième unité de commande (ECU-1, ECU-2) ; et c) le pilotage de la deuxième unité d'actionnement de frein de stationnement électrique (43) au moyen de la deuxième unité de commande (ECU-2 ; ECU-3) sans piloter la première unité d'actionnement de frein de stationnement électrique (13) au moyen de la deuxième unité de commande (ECU-2 ; ECU-3) ; les deux unités d'actionnement de frein de stationnement (13, 43) étant associées soit aux roues avant soit aux roues arrière et chacune des unités d'actionnement de frein de stationnement (13, 43) étant associée à une roue ;
d') la troisième unité de commande (ECU-3), dans un mode de verrouillage de transmission, lorsque la position de stationnement est sélectionnée au niveau de l'élément d'actionnement et qu'une commande de verrouillage de transmission est ainsi générée, communiquant, via une liaison de communication (BUS-1) sous forme d'un premier système de bus (BUS-1) en parallèle avec la première et la deuxième unité de commande (ECU-1, ECU-2) et amenant ces dernières à piloter la première et la deuxième unité d'actionnement de frein de stationnement électrique (13, 43) sur la base d'une commande de verrouillage de transmission.

12. Procédé selon la revendication 11, comprenant en outre
la détection d'une commande de pilotage, la commande de pilotage étant une demande de frein de stationnement par le conducteur, une demande de verrouillage de transmission par le conducteur ou une demande de freinage d'urgence, le pilotage de la première unité d'actionnement de frein de stationnement électrique (13) et de la deuxième unité d'actionnement de frein de stationnement électrique (43) étant réalisé en réponse à la détection de la commande de pilotage.

13. Programme informatique comprenant un code de programme pour l'exécution du procédé selon la revendication 11 ou 12 lorsque le procédé est exécuté par la première unité de commande (ECU-1) et la deuxième unité de commande (ECU-2).

14. Système de module de commande comprenant : le programme informatique selon la revendication 13 ; et la première unité de commande (ECU-1) et la seconde unité de commande (ECU-2) qui sont réalisées pour l'exécution du programme informatique.
